# EUROPEAN PATENT APPLICATION

(11) **EP 3 441 929 A1**
(43) Date of publication of application: **13.02.2019**
(21) Application number: 18192175.0
(22) Date of filing: 22.06.2012
(51) Int. Cl.: G06Q 30/06, G07G 1/14

(54) **ELECTRONIC PRICE LABEL SYSTEM AND METHOD**

(30) Priority: 24.06.2011 US 201113168466
(62) Divisional of application: 12742977.7
(71) Applicant: Sensormatic Electronics, LLC, Boca Raton, FL 33487 (US)
(72) Inventor: RELIHAN, Timothy J., Boca Raton, FL 33487 (US); WAGNER, Jeffrey, Paul, Boynton Beach, FL 33472 (US); RASBAND, Paul, Brent, Lantana, FL 33462 (US)
(74) Representative: Hafner & Kohl

(57) **Abstract**

A product display system and method. A database stores product information for a corresponding product. An access point, which can be a reader, receives the product information. The access point is arranged to wirelessly transmit the product information within a corresponding interrogation zone. The wireless transmission uses an electronic product code ("EPC") transmission protocol. An electronic price label ("EPL") has an antenna, an RFID element and a display. The antenna is arranged to receive the product information from the access point. The RFID element is in communication with the antenna. The RFID element stores the received product information. The display is arranged to display the received product information.

## Description

### FIELD OF THE INVENTION

The present invention relates generally to wireless communications, and more specifically to a method and system for transmitting pricing and product description information to pricing labels over an radio frequency identification ("RFID") system.

### BACKGROUND OF THE INVENTION

Typically, retail stores affix price labels to shelves or to merchandise in order to provide information to customers about the product. The product's label displays the product's description along with its price. In the majority of cases, these price labels are paper-based labels. Paper-based labels require the tedious and manually-intensive process of printing and applying new labels every time there is a price or product description update. This is a laborious and time-consuming process for store associates.

Attempts to provide electronic price labels ("EPLs") via wired and wireless technologies have proven inefficient and have not gained widespread acceptance. The use of infrared transmissions or proprietary wireless protocols has also failed to adequately provide accurate and timely product pricing updates. Many known solutions employ proprietary protocols that do not leverage existing standards or widely adopted protocols or chipsets. This results in higher implementation costs and a return on investment that is not deemed adequate or fast enough for most retail businesses. Further, retailers are reluctant to adopt proprietary technologies that depend on a single company. Also, existing solutions concentrate on using LCD displays, which require higher power and energy than other display technologies. Due to the use of LCDs, the battery lifetime is greatly reduced from what it could be using other technologies.

Therefore, what is needed is an efficient and cost-effective system and method for wirelessly providing automated pricing and product description updates to EPLs attached to shelves or merchandise where they are viewable via an electronic display to show the pricing and product information.

### SUMMARY OF THE INVENTION

The present invention advantageously provides a method and system for displaying product information. The product information is wirelessly transmitted to an electronic price label ("EPL") from an access point, such as a radio frequency identification ("RFID") reader, using an RFID electronic product code ("EPC") transmission protocol. The EPL receives the EPC transmission, extracts the product information and displays the product information. For example, the EPL can be affixed to a corresponding product or positioned on a product display shelf.

In accordance with one aspect, the present invention provides a method of transmitting information to an electronic pricing label. Product information is stored in a database. The product information is related to a product associated with an EPL. The product information is transmitted to at least one access point. The at least one access point establishes an interrogation zone. The EPL is identified within the interrogation zone of at least one access point. The product information is transmitted to the EPL within the interrogation zone of identifying at least one access point. The transmission from the at least one access point to the identified at least one EPL uses an electronic product code ("EPC") transmission protocol.

In accordance with another aspect, the present invention provides a product display system in which a database stores product information for a corresponding product. An access point receives the product information. The access point is arranged to wirelessly transmit the product information within a corresponding interrogation zone. The wireless transmission uses an electronic product code ("EPC") transmission protocol. An electronic price label ("EPL") has an antenna, an RFID element and a display. The antenna is arranged to receive the product information from the reader. The RFID element is in communication with the antenna. The RFID element stores the received product information. The display is arranged to display the received product information.

In accordance with still another aspect, the present invention provides an EPL. The EPL has an RFID element. The RFID element receives a product information signal in which the product information signal is based on an EPC transmission protocol and contains product information related to a product associated with the EPL. A controller receives the product information from the RFID element. A display is in communication with the controller. The display displays product display information received from the controller.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a block diagram of an exemplary electronic price label updating system constructed in accordance with the principles of the present invention;
FIG. 2 is a block diagram of exemplary components of the electronic price label in accordance with the principles of the present invention;
FIG. 3 is a flowchart of an exemplary the process by which a reader and electronic price label interact in accordance with the principles of the present invention;
FIG. 4 is a diagram of exemplary the memory utilization of an RFID chip located within the electronic price label of the present invention; and
FIG. 5 is a flowchart of an exemplary process performed by a master control chip to operate the electronic price label of the present invention.

### DETAILED DESCRIPTION OF THE INVENTION

Before describing in detail exemplary embodiments that are in accordance with the present invention, it is noted that the embodiments reside primarily in combinations of apparatus components and processing steps related to implementing a system and method for providing product description and pricing updates to an electronic pricing label by leveraging extending standard wireless communication protocols.

Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

One embodiment of the present invention advantageously provides a method and system for automatically and seamlessly providing product pricing and description updates to one or more electronic pricing labels ("EPLs"). The inventive system includes a server that stores product description and pricing information. The server sends product related information to one or more readers or access points. Each access point wirelessly communicates the product information to one or more EPLs that are each associated with a corresponding product. The product information is then displayed on the EPL which can be affixed to the product itself or to shelving where the products are situated. The transmission of pricing information can occur over the same radio frequency identification ("RFID") infrastructure that may already be in place at the store for product interrogation and identification.

The present disclosure will be understood more fully from the detailed description given below and from the accompanying drawings of particular embodiments of the invention which, however, should not be taken to limit the invention to a specific embodiment but are for explanatory purposes.

Numerous specific details may be set forth herein to provide a thorough understanding of a number of possible embodiments of a system of transmitting pricing and product information to one or more EPLs incorporating the present disclosure. It will be understood by those skilled in the art, however, that the embodiments may be practiced without these specific details. In other instances, well-known methods, procedures, components and circuits have not been described in detail so as not to obscure the embodiments. It can be appreciated that the specific structural and functional details disclosed herein may be representative and do not necessarily limit the scope of the embodiments.

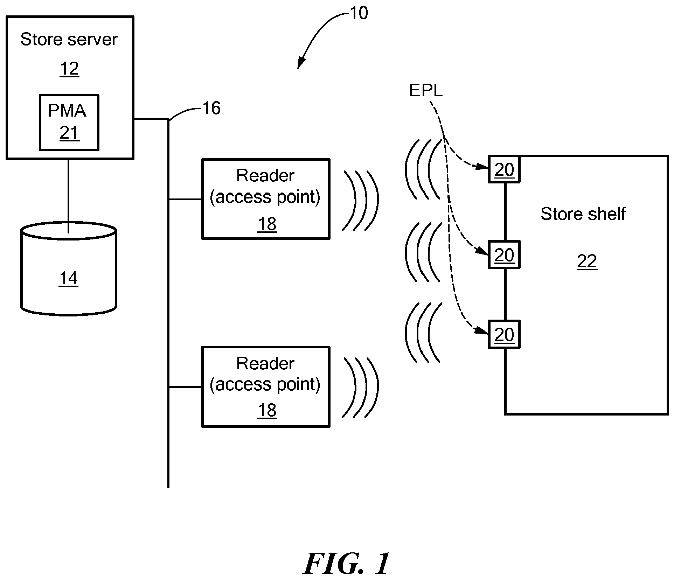

Referring now to the drawing figures in which like reference designators refer to like elements, there is shown in FIG. 1 an exemplary configuration of an electronic price label updating system 10 according to an embodiment of the present invention. System 10 includes a server 12, which could be located at a store, or remotely. Server 12 either includes or is in communication with a database 14 that stores pricing and product information related to products within the store. Server 12 periodically transmits pricing and product information updates onto a store network 16. Server 12 includes a CPU, volatile and/or non-volatile storage memory and a communication interface to allow server 12 to perform the functions described herein. The storage memory stores programmatic software code which, when executed, performs the functions described herein relating to server 12.

Store network 16 interconnects server 12 with one or more access points or access points 18. Store network 16 can be a wired or wireless network using a protocol such as TCP/IP to facilitate communication between server 12 and access points 18. Store network 16 can be Ethernet based. Access points 18 receive the pricing and product information from server 12, translate this information and send it, via a wireless connection to EPLs 20. That is, a client application on store server 12 uses a traditional internetworking protocol stack such as Ethernet/IP/TCP/HTTP or similar technology to communicate with access point 18, and access point 18 then translates the application data into a C1G2 (also known as EPCglobal Gen2) passive RFID protocol for transfer to EPLs 20, which are equipped with a C1G2 RFID interface.

Of note, although FIG. 1 shows a single server 12, the present invention is not limited to such. It is contemplated that more than one server can be implemented. Also, the terms "reader" and "access point" are used interchangeably herein and refer to devices that can wirelessly communicate with one or more electronic pricing labels ("EPLs") 20 using an RFID protocol. The communication path provides pricing and/or product information to EPLs 20 from server 12 via access point 18. In one embodiment, server 12 executes price management application ("PMA") 21.

Pricing and product information can be updated periodically by PMA 21. In an alternate embodiment, instead of periodic updates, a user such as a store employee can use PMA 21 to instruct server 12 to send an update. In yet another embodiment, pricing and/or product information is transmitted to access points 18 by PMA 21 when pricing and/or product information changes. For example, if a certain product is put on sale, then the sale price for that product is transmitted to access points 18, which in turn transmit the information to each EPL 20 associated with that product. The sale price can be displayed on a display unit (discussed below) of each EPL 20.

EPLs 20 are pricing labels affixed to or otherwise associated with products. In some instances, EPLs 20 are labels affixed to a store shelf 22 that displays products. Each EPL 20 includes a display that depicts pricing and product information about the corresponding product. Thus, EPL 20 need not be affixed directly to the product but may be affixed to store shelving and other fixtures. In addition to pricing, EPL 20 can also display information about the corresponding associated product, including but not limited to nutritional information, special offers, promotional messages and other information to assist customers with making informed decisions about the product.

In one embodiment, the UHF RFID EPC Class 1 Generation 2 ("EPC C1G2") protocol suite developed under the EPCglobal (GS1) organization and also adopted and standardized by the International Standards Organization (ISO) under the ISO 18000-6C specification can be used for communication with EPL 20. A protocol used for this server-to-access point communication is the Low Level Reader Protocol ("LLRP") according to the EPCglobal standard specification suite. More specifically, the LLRP data packets contain an application-level data payload which can be used to control the information displayed by EPL 20. This application level data may conform to an XML style schema specific to the application being used and may include XML tags corresponding to content for product item name fields, unit of measure fields, price per unit fields, price fields, etc., as well as formatting selections such as font size, font type, font color, background color, and other display characteristics. Details about the process involved with the transfer of this information to EPL 20, as well as the processing of that information by EPL 20, are provided below.

Each access point 18 has a range of communication within which it can address and communicate to all EPLs 20 in system 10. Multiple access points 18 may be used to cover a region such as, for example, a shop floor area. Access points 18 can overlap their communication ranges to ensure every EPL 20 can communicate with at least one access point 18. Each EPL 20 can be uniquely addressed and be in communication with a reader or access point 18 due to the protocol capabilities used and due to the fact that each EPL 20 has a uniquely identifiable serial number. As noted above, an exemplary communication protocol suite for use in connection with communication with EPLs 20 is the EPC C1G2 protocol suite.

Several manufacturers build readers and transponders that comply with the EPC C1G2 protocol. This protocol enables item level tagging using inexpensive passive or battery assisted chipsets encapsulated with an antenna in the transponder tag. Access points 18 can be RFID readers, which wirelessly transmit not only pricing and product description data to EPLS 20 but which also interrogate tags as in a conventional RFID interrogation system. Thus, system 10 can provide pricing and product updates via access points 18 that are used in conventional RFID reader-based interrogation systems while also using these same readers in the conventional RFID tag reading sense. In this fashion, an existing RFID system infrastructure with existing transmission protocol can incorporate the present invention.

In another embodiment, access points 18 are mobile handheld units and communicate with the store network and enterprise server 12 using wireless communications such as a WiFi network. The handheld readers communicate with EPLs 20 within the interrogation range of the readers using the same EPC C1G2 protocol interface as is used to interrogate RFID tags. In this embodiment, a store associate can walk around the store with the handheld reader and so upload the pricing information to EPLs 20 that are within the communication, i.e., interrogation, range of the handheld reader.

In another embodiment, EPL 20 may be housed within the same enclosure as an item level RFID security tag. In this case, the tag is equipped with a display, which may be, for example, an electrophoretic or LCD display, to show the pricing and/or product information. The security tag may be equipped with an EPC C1G2 compliant electronic circuit "chip" and a microprocessor. The microprocessor and EPC C1G2 chip can be integrated as a single electronic circuit chip. In addition, the security tag may include security and/or electronic article surveillance functions such as tamper detection and/or motion detection.

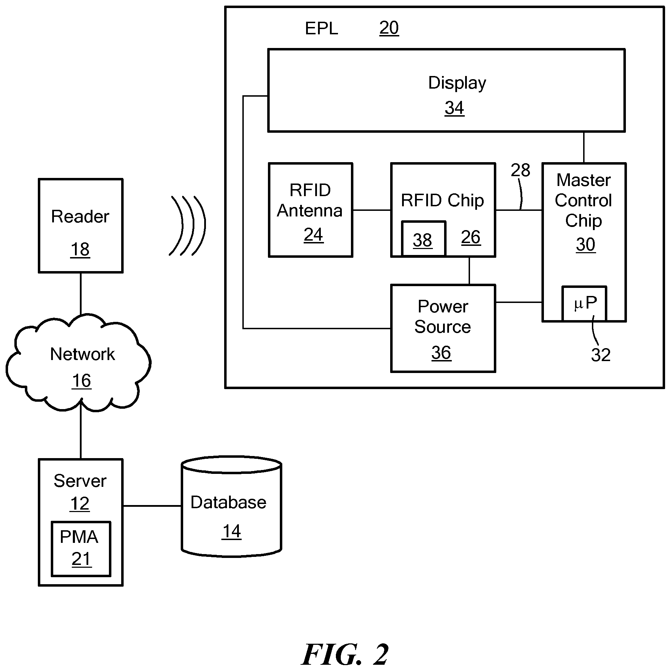

FIG. 2 is a diagram showing exemplary components of EPL 20, and illustrates the wireless transfer of information from access point 18 to EPL 20. As discussed above, the transfer of data between access point 18 and EPC 20 is via the EPC C1G2 wireless protocol. Using this protocol or another transmission protocol, EPL 20 detects UHF signals from access point 18 via an RFID antenna 24 and initiates an RFID state machine in an RFID element such as RFID interface chip 26. The wireless protocol being utilized implements a tag singulation process that avoids signal collision that might occur with other RFID tags and EPLs 20 if these EPLs 20 are sharing the interrogation area of access point 18 at any one moment. Access point 18 initiates a one-to-one communication with EPL 20. The initiation includes an identification of EPL 20, by, for example, its ID number. Once this identification is made, access point 18 selects specific information intended for that particular EPL 20, e.g., price update information for the store inventory item associated with that EPL 20, which is stored in database 14, accessed by server 12 and transmitted to access point 18 over network 16. Access point 18 writes the information into a buffer register of user memory 38 or other storage device of RFID interface chip 26. The information stored in user memory 38 is then read via a synchronous data link such as a serial peripheral interface "SPI" interface 28 or other chip-to-chip interface, by a master controller chip 30 of EPL 20. Master controller chip 30 includes a microprocessor 32. In this way, certain registers within memory 38 of RFID interface chip 26 are used as a "pass through" or "pipe" by which data is transmitted by access point 18 to master control chip 30 of EPL 20.

In one embodiment, this transfer might occur as a sequence of bytes passing through a register in RFID interface chip 26. In another embodiment, specific registers in the user memory of RFID interface chip 26 might each be mapped to particular functions in master controller chip 30. These special registers in RFID interface chip 26 user memory are written to and read by PMA 21 in server 12 using the C1G2 protocol/RFID access point 18, and are read by master controller chip 30 using the chip-to-chip interface, e.g., SPI. Master controller chip 30 uses the information thus obtained to determine content and format of data shown on the display screen 34 of EPL 20.

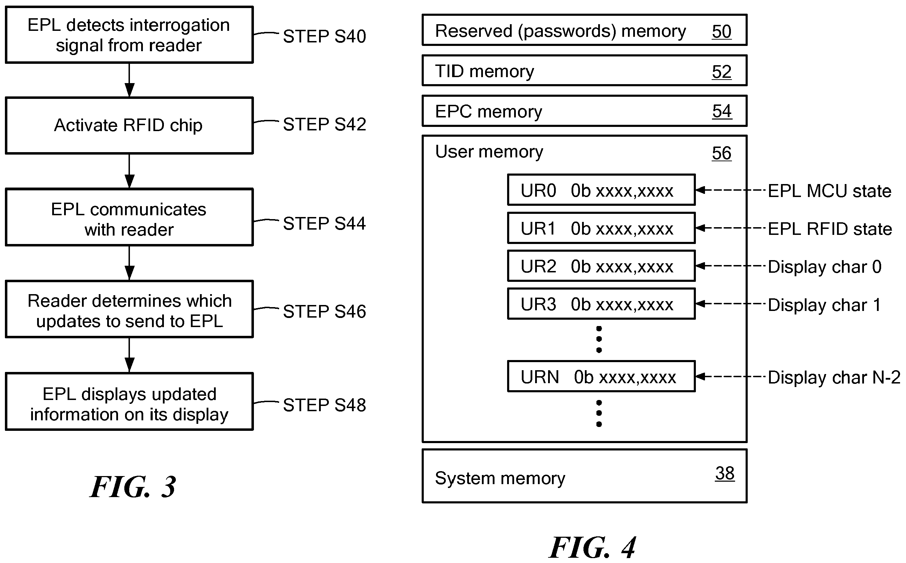

FIG. 3 is a flowchart of an exemplary process performed by an embodiment of the present invention, in particular, the communication of information between access point 18 and EPL 20. Using, for example, a wireless communication protocol such as EPC C1G2, EPL 20 detects interrogation signals, i.e., UHF signals, from access point 18 (step S40). EPL 20 detects the incoming signals, which include the ID number of the specific EPL that the reader, i.e., interrogation signal was intended for, and activates RFID interface chip 26 via RFID antenna 24 (step S42). EPL 20 communicates with the access point 18 that transmitted the UHF signal (step S44). Once an identification is made as to which EPL 20 is to receive the product information, access point 18 determines which product information to transmit to that particular EPL 20 (step S46). EPL 20 receives the product information, and its master control chip 30 causes this information to be displayed on display screen 34 (step S48).

FIG. 4 is an exemplary embodiment of the organization of memory 38 within RFID interface chip 26 in EPL 20. According to the EPCglobal standards, a C1G2 passive RFID interface chip 26 contains four memory banks (banks 0-3) corresponding respectively to reserved memory 50, TID memory 52, EPC memory 54 and user memory 56. Reserved memory 50 contains kill and access passwords for chip 26, while TID memory 52 and EPC memory 54 contain certain identification numbers for chip 26. User memory 56 contains varying numbers of registers, depending on the chip manufacturer's particular implementation and design. The example described herein assumes that at least thirty-two 8-bit registers are available in user memory 56. In FIG. 4, these are labeled UR0, UR1, UR2, ... URN. In this particular example the first register (UR0) maps to the EPL's master control chip 30 state. Master controller chip 30 uses this register to communicate with PMA 21. For example, if master controller chip 30 detects that the battery in EPL 20 is nearly depleted, master controller chip 30 uses the SPI interface to write a code (*e.g.,* a 0xFF value) to the UR0 register. Periodically, as part of normal operation, PMA 21 reads the UR0 register via the RFID access point 18 nearest to EPL 20. Upon detection of the 0xFF value in register UR0, PMA 21 may issue a message via an email or text message reporting system to store personnel warning of the low-battery condition.

Similarly, register UR1 in user memory 56 could store the status or state code of RFID interface chip 26, and be used by the client application to communicate with EPL master control chip 30. For example, registers UR2, UR3, ... UR21 are mapped to the characters in the EPL's 1x20 character display, and that as part of a price update process, PMA 21 writes twenty new ASCII character code bytes to these twenty registers. In order to alert master controller chip 30 that these new values have been written into RFID user memory 56, PMA 21 also writes a special value (e.g., 0x01) into the EPL RFID state register UR1. Using this approach, master controller chip 30 (via the SPI interface) need only monitor one register - register UR1 - in order to determine whether the twenty display registers have been updated. When master control chip 30 determines that a value of 0x01 is in the RFID state register, master control chip 30 knows that it must also read the twenty display character registers and update EPL display 34 according to the new ASCII character code values. Shown below are examples of the state codes that may be used in this two-way communications approach.
EPL chip state = 0 ... Chip 30 is initialized/normal waiting state with no action pending.
EPL chip state = 1 ... Chip 30 is currently updating display.
EPL chip state = 2 ... Chip 30 has successfully updated display.
EPL chip state = 3 ... Chip 30 has encountered an error in updating the display - display inactive.
EPL chip state = 4 ... Client (PMA) acknowledged display update.
EPL chip state = 255 ... Chip 30 power is low (Chip 30 wakes from sleep, if possible, only periodically).
EPL RFID state = 0 ... No client message pending for EPL chip 30.
EPL RFID state = 1 ... Client message for EPL chip 30 ... Display character registers contain updated values.

Of course, it is understood that the above state codes are exemplary in nature and are not intended to be the complete set of all possible state codes. Other state codes and values can be used and fewer than all of the above-listed codes can also be implemented.

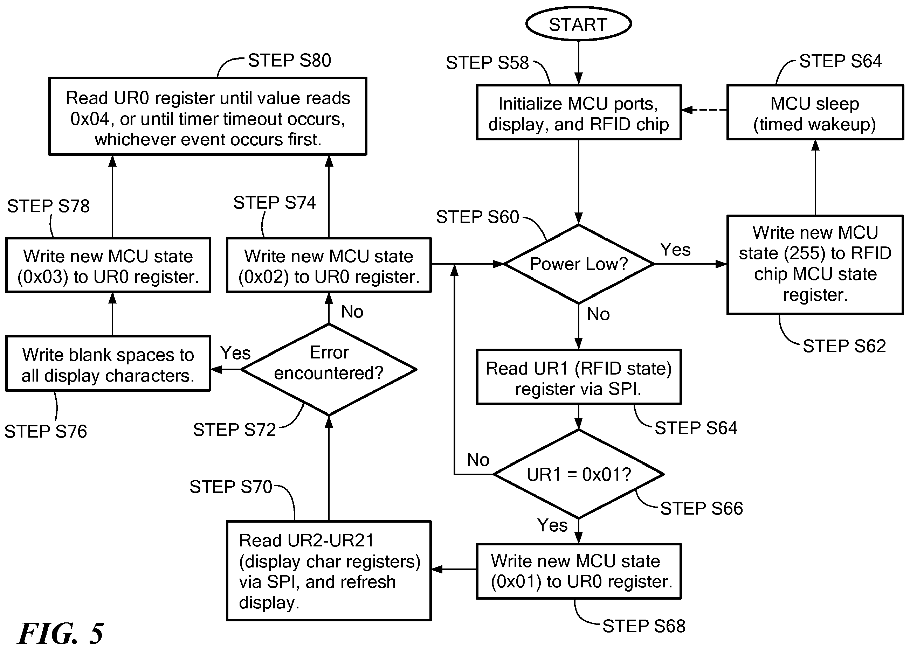

FIG. 5 is a flowchart of an exemplary process used by master control chip ("MCU") 30 to operate EPL 20. After power-up and initialization of MCU 30, display, ports, and other peripherals (step S58), MCU 30 checks its power supply level (step S60). If the power supply is low, MCU 30 writes a new MCU state to the RFID interface chip 26 state register (step S62) and goes into a sleep state (step S64). Under normal operation, the power level is sufficient to operate EPL 20 and MCU 30 enters normal operation mode. MCU 30 checks the UR1 register value in user memory 56 of RFID interface chip 26 (via SPI interface with the RFID interface chip) (step S64). If it is determined that the value equals 0x01 (step S66) then, according to the state code scheme shown above, MCU 30 writes a new MCU state to the UR0 register (step S68), and MCU's display refresh function is activated, i.e., MCU 30 reads the user memory registers mapped to display character slots and refreshes the display according to the register values and their meaning in the ASCII coding standard (that is, the ISO 8859-1 "extended ASCII / ISO Latin-1" character set) (step S70). Upon successful completion of the display refresh, and after determining that no error has been encountered (step S72), MCU 30 writes a 0x02 value in the UR0 register (step S74). PMA 21 monitors this register using reads by RFID access point 18 and C1G2 air interface protocol. If an error is encountered, MCU 30 writes blank spaces to all display characters (step S76) and writes a new MCU state (0x03) to the UR0 register (step S78). The UR0 register is read until the value reads 0x04 or until a specified amount of time has elapsed (step S80). When PMA 21 obtains a value of 0x02 (or 0x03 in the case of a display refresh error), PMA 21 writes a value of 0x04 to the same register (UR0) as a message acknowledgement. When MCU 30 of EPL 20 reads this value over the SPI interface, MCI 30 writes a 0x00 value (normal operation mode state) to the register and returns to the power monitoring and UR1 register monitoring operations.

Note that, from the perspective of PMA 21, a display refresh for a particular EPL unit is accomplished as follows: First, PMA 21 determines (by database lookup or by a general search by all readers issuing C1G2 based tag searches) which RFID access point 18 is nearest to or located near enough to the EPL 20 in question such that EPL 20 is in the field of view (tag interrogation field) of access point 18. Next PMA 21 singulates EPL 20 using the C1G2 protocol, i.e., it accesses the RFID interface/tag of EPL 20 such that all other tags and EPL units in the field of view are silenced, and a one-to-one communication is established between access point 18 and the EPL 20 in question. Next, access point 18 puts the tag in the "secured" state using a required tag access password, also located in database 14 on store server 12. At this point, access point 18 has permission to read from and write to the EPL's RFID interface chip 26 user memory registers. PMA 21 writes the ASCII characters to the display registers UR2-UR21, according to the example above, and then writes a value of 0x01 to the UR1 register. Following this, the PMA uses RFID access point 18 to monitor the UR0 register. When PMA on server 12 obtains a value of 0x02 from the UR0 register, PMA 21 knows that the display was successfully updated by the EPL's master controller, or in the case of a value of 0x03, knows that EPL 20 encountered a display refresh error. PMA 21 over-writes the UR0 register value with the acknowledgement value (0x04).

The specific protocol used for the server-to-reader communication can be the standard LLRP (low lever reader protocol) according to the EPCglobal standard specification suite. More specifically, the LLRP data packets can contain a data payload, using the customer commands and data features of LLRP, which are used to control the information shown on the EPL display 34. In some embodiments, this application level data conforms to an XML style schema specific to the application at hand, and includes XML tags corresponding to content for product item name fields, unit of measure fields, price per unit fields, price fields, etc., as well as formatting selections such as font size, font type, font color, background color, and other display characteristics. In the embodiment described above, the pricing and control data passed to EPL 20 over LLRP uses simple codes and data bytes which are posted in the RFID interface chip user memory.

According to the EPCglobal LLRP ("low-level reader protocol") standard specification, the client application uses access specifications (AccessSpecs) and reader operation specs (ROSpecs) to control the details of the reader operation. The access specification parameter and its sub-parameters define which tags, i.e., EPLs 20, are to be addressed by access point 18. AccessSpec includes the AccessCommand parameter which includes a TagSpec describing which tag or tags are to be accessed, and an OpSpec describing what reader operation such as data read, data write, etc., is to be performed on each tag. The reader operation spec ("ROSpec") object instance includes the details by which an upper-level application such as PMA 21 on server 12 controls RFID access point 18 and its operations on the tags and, in this instance, EPL 20. The ROSpec object contains one or more instances of sub-objects of type AISpec and/or RFSurveySpec. Specifically, the ROSpec is described by the ROSpec parameter object, which includes the ROSpecID, Priority (0-7), CurrentState (0 = disabled; 1 = Inactive; 2 = Active), and ROBoundarySpec. The ROBoundarySpec specifies the lifetime of the ROSpec command, as well as its start and stop trigger events or conditions. For example, if the ROBoundarySpec's ROSpecStartTrigger = 1, the ROSpec command is executed by RFID access point 18 as soon as it is received from PMA 21. Generally, the ROBoundarySpec's ROSpecStopTrigger = 0, which means the ROSpec ends when all of the reader operations defined by it are completed by access point 18. When an ROSpec is sent by PMA 21 to RFID access point 18 in order to communicate with RFID tags such as EPL 20, the ROSpec will include at least one Antenna Inventory specification ("AISpec") parameter. The AISpec comprises an AISpecStopTrigger value, which, for example, is equal to 3 when the ROSpec should cease upon capture of a particular tag, AntennaID, which, for example, is equal to 0 when the ROSpec should be executed for all antennas connected to RFID access point 18, and InventoryParameterSpecs. This last parameter details the actual reader operations to be performed at each antenna.

Each access point has a range of communication within which it can address and communicate to the EPLs 20. Multiple access points may be used to cover a shop floor area with overlap of communication ranges to ensure every EPL 20 can have communication to at least one access point. Each EPL 20 can be uniquely addressed and communicated to by one or more access points such as access points 18 due to the protocol capabilities of EPC C1G2 and because each EPL 20 has a uniquely identifiable serial number. In another embodiment, the access points 18 are mobile handheld units that connect to the store network and enterprise server 12 via a wireless communication means such as WiFi. The handheld access points 18 communicate to EPLs 20 within their interrogation range via the EPC C1G2 protocol interface. In this situation, the store associate can walk around the store with the handheld access point 18 and in doing so update pricing information to EPLs 20 that are within range of the handheld access point 18.
Another embodiment, EPL 20 is in combination to and within the same enclosure as an item level security tag, whereby the tag is equipped with a display (either e-paper or LCD) to show the pricing information. The tag may be equipped with the EPC C1G2 RFID interface chip and microprocessor discussed above. In addition, the tag may include security or electronic article surveillance functions of tamper detection and/or motion detection.

Note that, in other embodiments, access point 18 passes information to master control chip 30 to determine or influence EPL operational parameters. Also note that the communications system described above may be used to store information from access point 18 in the EPL memory 38 for later retrieval (e.g., last price update time and date, EPC number of the store inventory item associated with the EPL's ID number, etc.
In one embodiment, the transfer of data occurs in 16-bit (one word) frames if the pass-through register is, for example, 16-bits in length. Master control chip 30 uses the obtained information to determine the content and format of pricing or product-related data shown that is to be shown a display screen 34 of EPL 20. Power supply 36 provides power to display 34.
In another embodiment, access point 18 passes information to master control chip 32 in order to determine the operational parameters of EPL 20. In yet another embodiment, system 10 could be used to store information from access point 18 in memory 38 for later retrieval (e.g., last price update time and date, EPC number of the store inventory item associated with the EPL's ID number, etc.).

The present invention can be realized in hardware, software, or a combination of hardware and software. Any kind of computing system, or other apparatus adapted for carrying out the methods described herein, is suited to perform the functions described herein.

A typical combination of hardware and software for server 12 can be a specialized or general purpose computer system having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.
It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope and spirit of the invention, which is limited only by the following claims.

In addition, unless mention was made above to the contrary, it should be noted that all of the accompanying drawings are not to scale. Significantly, this invention can be embodied in other specific forms without departing from the spirit or essential attributes thereof, and accordingly, reference should be had to the following claims, rather than to the foregoing specification, as indicating the scope of the invention.

## Claims

1. A method of transmitting information to an electronic pricing label in a store having a radio frequency identification ("RFID") infrastructure in place for product interrogation and identification, the method comprising:
storing product information in a database, the product information related to a product associated with an electronic pricing label ("EPL") (20);
transmitting the product information to at least one access point (18), the at least one access point (18) establishing an interrogation zone;
identifying the EPL (20) within the interrogation zone; and
transmitting the product information to the identified EPL (20) within the interrogation zone, the transmission from the at least one access point (18) to the identified at least one EPL (20) using an electronic product code ("EPC") transmission protocol,
wherein the at least one access point (18) is a radio frequency identification ("RFID") reader, wherein
the transmission of product information occurs over the same RFID infrastructure that is already in place at the store for product interrogation and identification; wherein
the access point (18) is a RFID reader, which wirelessly transmits not only pricing and product description data to EPLs (20) but which also interrogates tags as in a conventional RFID interrogation system; and/or wherein
the EPL (20) is housed within the same enclosure as an item level RFID security tag.

2. The method of Claim 1, wherein the EPL (20) associated with the product is affixed to the product.

3. The method of Claim 1, wherein the EPL (20) associated with the product is positioned on a shelf, the shelf housing the product.

4. The method of Claim 1, wherein the RFID reader is a handheld reader.

5. The method of Claim 1, wherein the EPC transmission protocol is an EPC class 1 generation 2 protocol.

6. The method of Claim 1, wherein transmitting the product information to the at least access point (18) occurs via a low level reader protocol ("LLRP").

7. The method of Claim 1, further comprising transmitting the product information to the EPL (20) associated with the product when the EPL (20) associated with the product is within the interrogation zone of the handheld reader.

8. The method of Claim 1, wherein the product information includes pricing information for the product.

9. A product information display system adapted to perform the method according to one of the Claims 1 to 8, the product information display system comprising:
a radio frequency identification ("RFID") reader;
an item level RFID security tag;
a database, the database storing product information for a corresponding product;
an access point (18), the access point (18) receiving the product information, the access point (18) arranged to wirelessly transmit the product information within a corresponding interrogation zone, the wireless transmission using an electronic product code ("EPC") transmission protocol; and
an electronic price label ("EPL"), the EPL (20) having:
an antenna arranged to receive the product information from the access point (18);
an RFID element in communication with the antenna, the RFID element storing the received product information; and
a display arranged to display the received product information; wherein
the access point (18) is the RFID reader, which wirelessly transmits not only pricing and product description data to EPLs (20) but which also interrogates tags as in a conventional RFID interrogation system; and/or wherein
the EPL (20) is housed within the same enclosure as the item level RFID security tag.

10. The system of Claim 9, wherein the EPL (20) is positionable on a shelf proximate the corresponding product.

11. The system of Claim 9, wherein the EPC transmission protocol is an EPC class 1 generation 2 protocol.

12. The system of claim 9, wherein the access point (18) is a handheld reader.

13. The system of Claim 9, wherein the RFID element includes a memory, the memory having a user memory area, the user memory area storing the product information.

14. The system of Claim 9, wherein the product information includes pricing information.

15. An electronic pricing label ("EPL") (20), adapted to perform the method according to one of the Claims 1 to 8, the EPL (20) comprising:
an item level radio frequency identification ("RFID") security tag;
a RFID element, the RFID element receiving a product information signal from an access point (18), the product information signal being based on an electronic product code ("EPC") transmission protocol and containing product information related to a product associated with the EPL (20);
a controller, the controller receiving the product information from the RFID element; and
a display in communication with the controller, the display displaying product information received from the controller; wherein
the access point (18) is a RFID reader, which wirelessly transmits not only pricing and product description data to EPLs (20) but which also interrogates tags as in a conventional RFID interrogation system; and/or wherein
the EPL (20) is housed within the enclosure of the item level RFID security tag.

16. The EPL of Claim 15, wherein the RFID element includes a memory, the memory having a user memory area, the user memory area storing the product information.

17. The EPL of Claim 16, wherein the user memory further stores a state of the controller, the state of the controller including a low battery indication.

18. The EPL of Claim 16, wherein the user memory further stores a state of the RFID element, the state of the RFID element being used by the controller to determine when the product information has been updated.
